# NEUE EUROPÄISCHE PATENTSCHRIFT

(11) **EP 2 024 457 B2**
(45) Veröffentlichungstag und Bekanntmachung des Hinweises auf die Entscheidung über den Einspruch: **26.04.2017**
(45) Hinweis auf die Patenterteilung: 07.07.2010
(21) Anmeldenummer: 07703176.3
(22) Anmeldetag: 01.02.2007
(51) Int. Cl.: C09J 175/00, C08G 18/10, C08G 18/76

(54) **KLEB-/DICHTSTOFFZUSAMMENSETZUNG MIT DOPPELTEM HÄRTUNGSMECHANISMUS**
ADHESIVE/SEALANT COMPOSITION WITH DUAL CURING MECHANISM
COMPOSITION D'ÉTANCHÉITE/ADHÉSIVE À MÉCANISME DE DURCISSEMENT DOUBLE

(30) Priorität: 31.05.2006 DE 102006025769
(43) Veröffentlichungstag der Anmeldung: 18.02.2009
(73) Patentinhaber: Henkel AG & Co. KGaA, 40589 Düsseldorf (DE)
(72) Erfinder: REIN, Manfred, 69493 Hirschberg (DE)
(86) Internationale Anmeldenummer: PCT/EP2007/000840
(87) Internationale Veröffentlichungsnummer: WO 2007/137633

(56) Entgegenhaltungen:
- EP-A- 0 431 412
- EP-A1- 0 255 572
- EP-A1- 0 757 067
- WO-A-88/06165
- WO-A1-01/30116
- WO-A1-88/09712
- DE-A1- 2 635 400
- DE-A1- 3 734 340
- US-A- 5 955 533
- SCHINDEL-BIDINELLI E.: 'Strukturelles Kleben und Dichten', Bd. 1, 1988, RHV HINTERWALDNER VERLAG, MÜNCHEN Seiten 144 - 155
- Sigma-Aldrich-Katalog: 4,4'-Methylenedianiline
- Produktdatenblatt Caytur® 21
- Sigma-Aldrich-Katalog: 1,12-Diaminododecane
- Produktdatenblatt Caytur® 31 DA
- FALBE J. ET AL: 'Römpp: 4,4' - Diaminodiphenylmethan', Bd. 10, GEORG THIEME VERLAG, STUTTGART Seiten 934 - 935

## Beschreibung

Gegenstand der Erfindung ist die Verwendung einkornponentiger Kleb/Dichtstoff-Zusammensetzungen, die sowohl durch Feuchtigkeit als auch (partiell) durch Hitze aushärtbar sind, zum Kleben von Bauteilen oder Baugruppen in der Fahrzeugindustrie und ein Verfahren zum Aushärten der einkomponentigen Zusammensetzungen durch Einwirkung von Wärme, gefolgt von weiterer Aushärtung durch Feuchtigkeit.

In der industriellen Fertigung von komplexeren Einheiten wird immer stärker dazu übergegangen, diese in einzelnen Modulen separat zu fertigen und anschließend diese Module zum Endprodukt zu fügen. Besonders ausgeprägt ist dieser Trend in der Fahrzeugindustrie, insbesondere in der Automobilindustrie. Da hier in zunehmendem Maße Module aus verschiedenen Werkstoffen miteinander gefügt werden müssen, setzt sich das Kleben und insbesondere das strukturelle Kleben gegenüber traditionellen mechanischen Befestigungsverfahren wie Schweißen, Schrauben oder Bördeln Immer mehr durch.

Beispiele für derartige modulare Bauweisen sind die Klebung der feststehenden Scheiben eines Kraftfahrzeuges, Batteriekästen, Abdeckplatten oder Dachmodule, die in der Endmontage eines Fahrzeuges unter Zuhilfenahme eines Montageklebstoffes mit der Fahrzeugkarosserie oder Karosserieteilen klebend verbunden werden.

Als Kleb-/Dichtstoffe für derartige Aufgaben werden beispielsweise zweikomponentige Kleb-/Dichtstoffe eingesetzt, die erst bei ihrer Endanwendung miteinander gemischt werden. Die zweikomponentigen Kleb-/Dichtstoffe können vorteilhafterweise in ihrer Reaktivität so eingestellt werden, dass der Festigkeitsaufbau und die Erreichung der Endfestigkeit sehr schnell erfolgen, wobei die vollständige Aushärtung der Klebemasse verhältnismäßig unabhängig von der Umgebungstemperatur und insbesondere von der umgebenden Luftfeuchtigkeit ist. Nachteil derartiger zweikomponentiger Systeme sind ihre begrenzte Topfzeit bis zum Einsetzen der Härtungsreaktion sowie ihre Anfälligkeit für Misch- und Dosierfehler. Außerdem erfordern insbesondere hochviskose, pastöse Kleb-/Dichtstoffe eine aufwändige Misch-, Förder- und Dosiertechnik.

Einkomponentige hitzehärtende Kleb-/Dichtstoffsysteme können in der Endmontage eines Fahrzeuges nur in begrenztem Umfange eingesetzt werden, da hier keine hohen Temperaturen zur Aushärtung der Klebstofffuge mehr anwendbar sind. Aus diesem Grunde haben sich insbesondere bei der Klebung von größeren Fügespalten sowie bei Bauteilen mit mindestens einem Wasserdampfdurchlässigen Substrat die einkomponentigen feuchtigkeitshärtenden Klebstoffsysteme durchgesetzt. Die einkomponentigen feuchtigkeitshärtenden Kleb-/Dichtstoffsysteme des Standes der Technik haben jedoch den Nachteil, dass die Aushärtungsgeschwindigkeit sehr stark von den Umgebungsbedingungen, hier insbesondere von der in der Umgebungsluft herrschenden Feuchtigkeit und von der Gestaltung der Klebefuge (Diffusionskontrolle der in die aushärtende Klebstoffschicht eindringenden dampf- oder gasförmigen Wassermoleküle) abhängig ist. Insbesondere bei feuchtigkeitshärtenden einkomponentigen Polyurethan Kleb-/Dichtstoffsystem wird beobachtet, dass ihre Aushärtung nur sehr langsam erfolgt, da die geschwindigkeitsbestimmende Wasserdiffusion durch den eher hydrophoben Charakter der Produkte behindert ist. Wenn zusätzlich an trockenen Wintertagen das Angebot an Feuchtigkeit in den Montagehallen sehr gering ist, kann es, je nach applizierter Schichtdicke, bis zu einigen Tagen dauern, bis eine vollständige Durchhärtung erfolgt ist.

Für zweikomponentige Kleb-/Dichtstoffe sind auch Systeme vorgeschlagen worden, die weniger empfindlich gegen Misch- und Dosierfehler sind und die trotzdem eine rasche, von klimatischen Verhältnissen weniger abhängige Durchhärtungsgeschwindigkeit erzielen sollen. So beschreibt US-A-6 025 445 ein zweikomponentiges Kleb-/Dichtstoffsystem, bei dem die Komponente A als Hauptbestandteil ein gesättigtes Kohlenwasserstoffpolymer enthält, das Siliciumenthaltende Gruppen aufweist, die hydrolysierbare Gruppen an das Siliciumatom gebunden haben und die unter Bildung von Siloxangruppen vernetzbar sind. Die Komponente B enthält einen Silanol-Kondensationskatalysator und Wasser oder ein hydratisiertes Metallsalz.

Auch für Kleb-/Dichtstoffe auf der Basis von Polyurethan-Prepolymeren oder Hybridsystemen aus Polyurethan-Prepolymeren, die zusätzlich reaktive Silangruppen enthalten, ist vorgeschlagen worden, Pasten aus Wasser und Füllstoffmaterialien als beschleunigende Komponente für an sich feuchtigkeitshärtende Bindemittelsysteme zu verwenden, wobei diese Wasserpaste zur besseren Homogenisierbarkeit in Viskosität und Fließeigenschaft der entsprechenden Applikation angepasst sein soll. Die Wasserpaste soll dabei unmittelbar vor der Applikation des Kleb-/Dichtstoffes dem feuchtigkeitshärtenden Bindemittelsystem zugemischt werden. Beispielhaft erwähnt seien hier die Dokumente US 4 835 012 A, US 4 780 520 A, US 4 758 648 A, US 4 687 533 A, US 4 625 012 A oder US 4 525 511 A. Während derartige Systeme zwar weniger anfällig für Misch- und Dosierfehler sind, haben sie jedoch den gleichen Nachteil der zweikomponentigen Systeme, dass sie über aufwändige Misch- und Dosieranlagen appliziert werden müssen, die zwangsläufig eine intensive Wartung erfordern.

Bei einer reinen Hitzehärtung wiederum ist es unabdingbar, dass die erforderliche Reaktionstemperatur an allen Stellen erreicht wird, da ansonsten die Härtung unvollständig ist oder gänzlich unterbleiben kann. Oft liegt jedoch die Temperatur der zur Verfügung stehenden Öfen nur wenig über der Reaktionstemperatur, weil die technischen Voraussetzungen keine höheren Temperaturen zulassen oder aber man bestrebt ist, diese aus Kostengründen zu senken. Dann kann es geschehen, dass beispielsweise an großen Masseteilen, die während des Ofendurchganges nicht die notwendige Reaktionstemperatur erreichen, eine unvollständige Aushärtung erfolgt.

Aus den vorgenannten Gründen ist es wünschenswert, Kleb-/Dichtstoffsysteme einsetzen zu können, die einen zweiten Härtungsmechanismus besitzen, damit auch solche unvollständig erwärmten Stellen vollständig aushärten. Es sind daher bereits in der Vergangenheit Kleb-/Dichtstoffsysteme vorgeschlagen worden, die 2 Härtungsmechanismen kombinieren. Es handelt sich hierbei um einkomponentig formulierbare Kleb-/Dichtstoffzusammensetzungen, die sowohl bei relativ niedrigen Temperaturen aushärtbar sind als auch zusätzlich und unabhängig davon mit der Feuchtigkeit der Umgebungsluft aushärtbar sind.

WO 88/06165 beschreibt die Herstellung eines hitze- und feuchtigkeitshärtenden 1-Komponenten-Polyurethan-Dicht- und Klebmittels auf der Basis von telechelen Isocyanat-Prepolymeren aus aromatischen Diisocyanaten im stöchiometrischen Überschuss, Polyolen und einem Katalysator für die Feuchtigkeitshärtung, die ein durch Erhitzen aktivierbares Vernetzungsmittel in Form einer mikroverkapselten Polyamino- oder Polyhydroxy-funktionellen Verbindung enthält. Gemäß der Lehre dieser Schrift kann bei unzureichend zur Verfügung stehender Luftfeuchtigkeit, oder wenn bereits sehr kurze Zeit nach der Applikation des Kleb-/Dichtmittels höhere mechanische Festigkeiten gefordert werden, das mikroverkapselte Vernetzungsmittel durch kurzzeitiges Erhitzen aktiviert werden, so dass eine partielle Härtung im Zeitraum von wenigen Minuten erreicht wird. Die weitere Aushärtung zur Endfestigkeit soll dann durch Reaktion mit der Luftfeuchtigkeit erfolgen.

US 6 680 430 B2 beschreibt die Herstellung einer Lautsprechermembran aus einer thermisch härtbaren Zusammensetzung, bestehend aus einem Polyurethanprepolymer und einem inaktivierten festen Polyamin als latentem Härter. Dabei soll das pulverförmige feste Polyamin einen mittleren Teilchendurchmesser von 20 µm, vorzugsweise zwischen 3 µm und 15 µm haben und an der Oberfläche beispielsweise durch anorganische Desaktivatoren desaktiviert werden. Zur Herstellung der Membran nach einem Reaktionsspritzguss-Verfahren soll das molare Verhältnis von Isocyanatgruppen zu Aminogruppen zwischen 1 : 0,5 und 1 : 2,0 sein. Vor dem Einspritzen der hitzehärtenden Zusammensetzung soll ein Gas in der Zusammensetzung dispergiert werden, damit die hitzehärtende Zusammensetzung in der Form aufschäumt.

EP 0 757 067 A1 beschreibt eine hitzehärtende Zusammensetzung mit guter Lagerstabilität und Aushärtbarkeit bei niedrigen Temperaturen. Diese Zusammensetzung enthält eine Polyisocyanat-Verbindung und ein Urethanprepolymer mit endständigen aktiven Isocyanatgruppen und ein Amin, das mit feinen Teilchen beschichtet ist. Dabei soll die Beschichtung der Oberfläche des festen Amins mit einem Schmelzpunkt von > 50 °C mit feinen Teilchen mit einer Teilchengröße von < 2 µm im Verhältnis von festem Amin / feine Teilchen von 1 : 0,001 bis 0,5 erfolgen. Das feste Amin soll eine mittlere Teilchengröße von < 20 µm aufweisen. Diese Schrift offenbart, dass bei mittleren Teilchengrößen oberhalb 20 µm des Amins die Polyurethanzusammensetzung nicht vollständig durch Hitze ausgehärtet werden kann. Ein doppelter Härtungsmechanismus derartiger Zusammensetzungen wird nicht offenbart.

US 4 663 415 offenbart ein Verfahren zur Herstellung von festen Polyaminen, die oberflächlich durch ein Polyaddukt stabilisiert werden. Dies erfolgt durch Umsetzung mit 0,1 bis 25 Äquivalent-% eines Isocyanates pro Amin Äquivalent mit einem wasserunlöslichen Di- oder höherfunktionellen Polyisocyanat. Dabei soll diese Desaktivierungsreaktion bei einer Temperatur unterhalb des Schmelzpunktes des festen Polyamins erfolgen. Diese Desaktivierung soll in Anwesenheit eines flüssigen Mediums, enthaltend Polyole mit 2 oder mehr Hydroxylgruppen pro Molekül und einem Molekulargewicht zwischen 62 und 10.000 erfolgen, wobei eine Suspension des Polyaddukt-beschichteten stabilisierten Polyamins in der flüssigen Phase gebildet wird. Als weitere Ausführungsform wird die Desaktivierung des festen Polyamins in einem Weichmacher oder in Wasser vorgeschlagen. Die Schrift schlägt vor, diese Dispersionen des oberflächlich desaktivierten Polyamins mit Isocyanat-Prepolymeren zu mischen, um eine höhere Lagerstabilität im Vergleich zu Mischungen von Isocyanat-Prepolymeren mit unstabilisierten festen Polyaminen zu erhalten. Diese Mischungen sollen durch Hitze, hohe Scherung oder Zusatz von Lösungsmitteln aushärtbar sein.

EP 0 834 522 A1 beschreibt die Verwendung von Klebstoffzusammensetzungen auf der Basis von Polyurethanen, herstellbar durch Umsetzung mindestens eines Polyols mit mindestens einem Polyisocyanat zu einem Polyurethan-Prepolymer mit einem Gehalt an freien Isocyanatfunktionen zwischen 2 und 9 Gew.% zum Verkleben von Materialien auf Basis von Holz, Metall oder ggf. mit anorganischen oder organischen Verstärkungsmitteln gefüllten Kunststoffen. Diese Schrift schlägt vor, zu dem Polyurethan-Prepolymer eine Suspension von Polyaminteilchen zu geben, die einen mittleren Durchmesser zwischen 30 und 60 µm aufweisen, wobei das Polyamin einen Schmelzpunkt zwischen 50 und 80 °C aufweisen soll. Es wird angegeben, dass diese Mischung in weniger als 5 Minuten bei einer Temperatur <120 °C aushärtbar ist. Klebstoffzusammensetzungen mit einem doppelten Härtungsmechanismus werden in dieser Schrift nicht offenbart.

Aufgabe der vorliegenden Erfindung war es daher, einkomponentige Kleb- und Dichtstoffe, die sowohl zumindest partiell hitzehärtbar sind, als auch durch Luftfeuchtigkeit aushärten können, für die Verwendung als Montageklebstoff in der Fahrzeugendmontage bereit zu stellen.

Die erfindungsgemäße Lösung der Aufgabe ist den Patentansprüchen zu entnehmen, sie besteht im wesentlichen in der Verwendung einer hitze- und feuchtigkeitshärtenden Zusammensetzung enthaltend
a) mindestens ein isocyanatfunktionelles Prepolymer mit im Wesentlichen endständigen Isocyanatgruppen, herstellbar durch Reaktion eines Polyols mit einem stöchiometrischen Überschuss einer Polyisocyanatverbindung und
b) mindestens ein Polyamin mit mindestens zwei primären oder sekundären Aminogruppen pro Molekül und einem Schmelzpunkt oberhalb von 55°C wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymers vorliegt,
zum Kleben von Bauteilen oder Baugruppen in der Fahrzeugindustrie, insbesondere zum Kleben von feststehenden Scheiben an den Flansch einer Fahrzeugkarosserie, zum Kleben von Außenblechen an den Rahmen von Anbauteilen, insbesondere von Türen, zum Kleben von Dachmodulen oder Fahrzeughimmeln an die Karosserie oder zum Kleben von Cockpitmodulen in den Fahrzeugrahmen, wobei der stöchiometrische Unterschuss der Aminogruppen zu den Isocyanatgruppen 30 % bis 10 % beträgt.

Weiterhin ist ein Verfahren zum Kleben von Bauteilen oder Baugruppen in der Fahrzeugindustrie Gegenstand der vorliegenden Erfindung. Bei diesem Verfahren soll mindestens ein Bauteil oder eine Baugruppe im Fügebereich transparent für Mikrowellenstrahlung sein. Das erfindungsgemäße Klebeverfahren beinhaltet die folgenden wesentlichen Schritte:

In einer weiteren Ausführungsform des erfindungsgemäßen Klebeverfahrens erfolgt die mikrowellenaktivierte thermische Härtung nur punktförmig oder
i) Aufbringen eines Klebstoffstranges auf Basis einer hitze- und feuchtigkeitshärtenden Zusammensetzung enthaltend
   a) mindestens ein isocyanatfunktionelles Prepolymer mit im Wesentlichen endständigen Isocyanatgruppen, herstellbar durch Reaktion eines Polyols mit einem stöchiometrischen Überschuss einer Polyisocyanatverbindung und
   b) mindestens ein Polyamin mit mindestens zwei primären oder sekundären Aminogruppen pro Molekül und einem Schmelzpunkt oberhalb von 55°C
   wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymers vorliegt, auf die Oberfläche eines Bauteils,
ii) Fügen des zweiten Bauteils, gegebenenfalls unter Zusammenpressen der Bauteile, bis die vorbestimmte Schichtdicke der Klebstoffschicht in der Klebefuge erreicht ist,
iii) Bestrahlen der Klebefuge mit Mikrowellenstrahlung durch das transparente Bauteil,
iv) gefolgt von einer Feuchtigkeitshärtung der verbliebenen Isocyanatgruppen des Klebstoffes mit der Luftfeuchtigkeit der Umgebung.
bereichsweise, wobei die nicht thermisch gehärteten Bereiche vollständig durch Luftfeuchtigkeit aushärten.

Ein weiteres Klebeverfahren ist gerichtet auf das Fügen von Baugruppen oder Bauteilen, die im Fügebereich aus metallischen Substraten bestehen. Hierbei wird zunächst ein Klebstoffstrang auf Basis der genannten Zusammensetzungen auf die Oberfläche eines Bauteiles aufgebracht, worauf das 2. Bauteil gefügt wird und ggf. unter Zusammenpressen der beiden Bauteile die vorbestimmte Schichtdicke der Klebstoffschicht in der Klebefuge erzeugt wird. Es schließt sich ein kurzzeitiges Erwärmen des Fügebereiches mit einer geeigneten Induktionsheizungsspule an, wodurch der aufgeheizte Bereich der Klebefuge zumindest partiell thermisch gehärtet wird, woran sich die Feuchtigkeitshärtung der verbliebenen Isocyanatgruppen der Klebstoff-Zusammensetzung mit der Feuchtigkeit der Umgebungsluft anschließt.

In einer weiteren Ausführungsform des letztgenannten Klebeverfahrens zum Fügen von Bauteilen, die im Fügebereich aus metallischen Substraten bestehen, wird der Fügebereich mit Hilfe von Heizzangen zumindest partiell erwärmt.

Weiterhin betrifft die vorliegende Erfindung eine Hitze- und feuchtigkeitshärtende Zusammensetzung enthaltend
a) mindestens ein isocyanatfunktionelles Prepolymer mit im Wesentlichen endständigen Isocyanatgruppen, herstellbar durch Reaktion eines Polyols mit einem stöchiometrischen Überschuss einer Polyisocyanatverbindung und
b) mindestens ein Polyamin mit mindestens zwei primären oder sekundären Aminogruppen pro Molekül und einem Schmelzpunkt oberhalb von 55°C wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymers vorliegt,
dadurch gekennzeichnet, dass der Unterschuss der Aminogruppen 30% bis 20 % beträgt.

Zur Herstellung der isocyanatfunktionellen Prepolymeren können als Polyole eine Vielzahl von höhermolekularen Polyhydroxyverbindungen verwendet werden. Als Polyole eignen sich vorzugsweise die bei Raumtemperatur flüssigen Polyether mit zwei bzw. drei Hydroxylgruppen pro Molekül im Molekulargewichts-Bereich von 400 bis 30000, vorzugsweise im Bereich von 1000 bis 15000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethern sind die Polytetramethylenglycole (Poly(oxytetramethylen)glycol, Poly-THF), die z.B. durch die saure Polymerisation von Tetrahydrofuran hergestellt werden. Dabei liegt der Molekulargewichts-Bereich der Polytetramethylenglycole zwischen 200 und 6000, vorzugsweise im Bereich von 800 bis 5000.

Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure, Korksäure, Undecandisäure, Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-Dodecandiol, Dimerfettalkohol, Glycerin, Trimethylolpropan oder deren Mischungen hergestellt werden können. Eine weitere Gruppe der erfindungsgemäß einzusetzenden Polyole sind die Polyester auf der Basis von ε-Caprolacton, auch "Polycaprolactone" genannt. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättige Fettsäuren enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie vorzugsweise Rizinusöl und dessen Derivate. Auch hydroxyfunktionelle Polybutadiene, wie sie z.B. unter dem Handelsnamen "Polybd" erhältlich sind, können für die erfindungsgemäßen Zusammensetzungen als Polyole eingesetzt werden. Neben den vorgenannten hydroxyfunktionellen Polybutadienen können auch hydroxyfunktionelle Polyisoprene sowie die entsprechenden hydroxyfunktionellen Copolymeren des Butadiens oder Isoprens mit Styrol sowie die Hydrierungsprodukte der hydroxyfunktionellen Polybutadiene, Polyisoprene oder deren Copolymeren eingesetzt werden.

Weiterhin eignen sich als Polyole lineare und/oder schwach verzweigte Acrylester-Copolymer-Polyole, die beispielsweise durch die radikalische Copolymerisation von Acrylsäureestern bzw. Methacrylsäureestern mit hydroxyfunktionellen Acrylsäure- und/oder Methacrylsäure-Verbindungen wie Hydroxyethyl-(meth)acrylat oder Hydroxypropyl(meth)acrylat hergestellt werden können. Wegen dieser Herstellungsweise sind die Hydroxylgruppen bei diesen Polyolen in der Regel statistisch verteilt, so dass es sich hierbei entweder um lineare oder schwach verzweigte Polyole mit einer durchschnittlichen OH-Funktionalität handelt. Die hydroxyfunktionelle Bindemittelkomponente kann auch Mischungen einer oder mehrerer der vorgenannten Polyolgruppen enthalten.

Als Diisocyanat zur Herstellung des isocyanatfunktionellen Prepolymers mit im Wesentlichen endständigen Isocyanatgruppen sind prinzipiell alle gängigen aromatischen, aliphatischen oder cycloaliphatischen Diisocyanate geeignet. Beispiele für geeignete aromatische Diisocyanate sind alle Isomeren des Toluylendüsocyanats (TDI) entweder in isomerenreiner Form oder als Mischung mehrerer Isomerer, Naphthalin-1,5-diisocyanat (NDI), Naphthalin-1,4-diisocyanat (NDI), Diphenylmethan-4,4'-düsocyanat (MDI), Diphenylmethan-2,4'-diisocyanat sowie Mischungen des 4,4'-Diphenylmethandüsocyanats mit dem 2,4'-Isomeren, Xylylen-diisocyanat (XDI), 4,4'-Diphenyl-dimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Diisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-isocyanato-1,5,5-trimethyl-cyclohexan (Isophorondiisocyanat, IPDI), Cyclohexan-1,4-diisocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI) und Dimerfettsäure-Diisocyanat. Beispiele für aliphatische Diisocyanate sind Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Lysindiisocyanat sowie 1,12-Dodecandiisocyanat (C₁₂DI). Ganz besonders eignet sich das Diphenylmethan-4,4'-diisocyanat (MDI), das Diphenylmethan-2,4'-diisocyanat sowie Mischungen des 4,4'-Diphenylmethandüsocyanats mit dem 2,4'-Isomeren.

Das isocyanatfunktionelle Prepolymers mit im Wesentlichen endständigen Isocyanatgruppen ist durch Reaktion eines oder mehrerer der vorgenannten Polyole mit einem stöchiometrischen Überschuss einer Polyisocyanatverbindung herstellbar. Dabei kann das NCO/OH-Verhältnis 1,2:1 - 5:1, vorzugsweise 1,2:1 bis 2,5:1 betragen. Als Polyisocyanatverbindung kann dabei eines oder mehrere der vorgenannten monomeren Diisocyanate eingesetzt werden, es können jedoch auch die in der WO01/40342A1 offenbarten monomerenarmen hochmolekularen Diisocyanate Verwendung finden.

Die vorgenannten Isocyanat-Prepolymeren mit im Wesentlichen endständigen Isocyanatgruppen auf der Basis der monomeren Diisocyanate oder der hochmolekularen Diisocyanate sind in der Regel bei Raumtemperatur (d. h. in einem Temperaturbereich zwischen 18°C und 25 °C) flüssig bis hochviskos. Für bestimmte Anwendungen zum Kleben großflächiger, schwerer Modulteile kann es zweckmäßig sein, in der Zusammensetzung wenigstens eine weitere Komponente vorzusehen, die bei Raumtemperatur fest und bei leicht erhöhter Temperatur, d. h. zwischen etwa 40 °C und 70 °C, flüssig ist und die in fester Form zumindest teilweise unverträglich mit dem/den flüssigen Prepolymeren ist. Ein Zusatz derartiger bei Raumtemperatur fester Bestandteile, die in einem sehr engen Temperaturintervall flüssig werden, ist aus der WO 95/00572 bekannt. Eine derartige Komponente kann dabei reaktive Isocyanatgruppen aufweisen. In einem solchen Fall kann sie aus monomeren Diisocyanaten wie zum Beispiel MDI oder TDI und kristallinen bzw. teilkristallinen Polyolen wie Poly-ε-Caprolacton oder teilkristallinen Polyestern auf der Basis von Adipinsäure und Hexandiol, Octandiol oder auf der Basis von Hexandiol und 1,12-Dodecandisäure hergestellt werden. Gemäß der Lehre der WO 95/00572 ist es jedoch auch möglich, anstelle der vorgenannten reaktiven festen Komponente eine nicht reaktive Komponente, die ebenfalls in dem vorgenannten Temperaturbereich zwischen 40 °C und 70 °C flüssig wird, einzusetzen. Bezüglich der nicht funktionellen, leicht schmelzbaren Oligomerkomponente sei auf die Beispiele 4 und 6 der WO 95/00572 verwiesen.

Als geeignete Polyamine mit mindestens zwei primären oder sekundären Aminogruppen pro Molekül und einem Schmelzpunkt oberhalb von 55°C seien beispielhaft aromatische Amine wie 4,4'-Diaminodiphenylmethan, 2,4'-Diaminodiphenylmethan, 3,3'-Diaminodiphenylmethan, 3,4'-Diaminodiphenyl-methan, 2,2'-Diaminobiphenyl, 2,4'-Diaminobiphenyl, 3,3'-Diaminobiphenyl, 2,4-Diaminophenol, 2,5-Diaminophenol, o-Phenylendiamin, m-Phenylendiamin, 2,3-Tolylendiamin, 2,4-Tolylendiamin, 2,5-Tolylendiamin, 2,6-Tolylendiamin, 3,4-Tolylendiamin und insbesondere aliphatische Amine wie 1,12-Dodecandiamin, 1,14-Tetradecandiamin, 1,16-Hexadecandiamin, 1,18-Octadecandiamin und 1, 20-Eicosandiamin genannt. Das erfindungsgemäß eingesetzte feste Polyamin hat dabei eine mittlere Teilchengröße (Gewichtsmittel) von 5 bis 50 µm, vorzugsweise liegt sie zwischen 10 und 30µm, wobei bevorzugt etwa 50% der Teilchen unter 10µm, 90% der Teilchen kleiner als 30 µm und 100% der Teilchen unter 50µm sind. Die Menge des eingesetzten Diamins wird dabei so bemessen, dass es im stöchiometrischen Unterschuss zu den Isocyanatgruppen der Prepolymer-Zubereitung vorliegt. Dieser stöchiometrische Unterschuss soll 50 bis 10%, vorzugsweise 30 bis 20% betragen.

Als Füllstoffe werden vorzugsweise Kreiden, natürliche gemahlene oder gefällte Calciumcarbonate, Calciummagnesiumcarbonate (Dolomit), Silicate wie z. B. Aluminiumsilicate, Schwerspat oder Magnesiumaluminiumsilicate oder auch Talkum eingesetzt. Weiterhin können ggf. andere Füllstoffe, insbesondere verstärkende Füllstoffe wie Ruße, ausgewählt aus der Gruppe der Flammruße, Channelruße, Gasruße oder Furnaceruße oder deren Mischungen mit verwendet werden. Zusätzlich können die Kleb-/Dichtstoffe gemäß vorliegender Erfindung Weichmacher bzw. Weichmachermischungen sowie Stabilisatoren, haftvermittelnde Zusätze (z.B. auf der Basis organofunktioneller Silane oder migrationsfähige, haftungsverstärkende Polyisocyanate gemäß der Lehre der WO 01/40342), Pigmente und weitere Hilfs- und Zusatzstoffe enthalten.

Die erfindungsgemäß zu verwendenden Zusammensetzungen können ggf. zusätzlich Katalysatoren enthalten, die die Bildung des Polyurethanprepolymeren bei seiner Herstellung beschleunigen und/oder die Feuchtigkeitsvernetzung nach der Applikation des Kleb-/Dichtstoffes beschleunigen. Als erfindungsgemäß einsetzbare Katalysatoren eignen sich z.B. die metallorganischen Verbindungen des Zinns, Eisens, Titans oder Wismuts wie Zinn(II)salze von Carbonsäuren, z.B. Zinn-II-acetat, -ethylhexoat und -diethylhexoat. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure. Konkrete Verbindungen sind Dibutyl- und Dioctyl-zinndiacetat, - maleat, -bis-(2-ethylhexoat), -dilaurat, Tributylzinnacetat, Bis(ß-methoxycarbonylethyl)zinndilaurat und Bis(ß-acetyl-ethyl)zinndilaurat.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat), Dibutyl- und Dioctylzinndidodecylthiolat, Bis(β-methoxycarbonyl-ethyl)zinndidodecylthiolat, Bis(β-acetyl-ethyl)zinn-bis(2-ethylhexylthiolat), Dibutyl- und Dioctylzinndidodecylthiolat, Butyl- und Octylzinn-tris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2-ethylhexoat) mit der allgemeinen Formel Rₙ₊₁Sn(SCH₂CH₂OCOC₈H₁₇)₃₋ₙ, wobei R eine Alkylgruppe mit 4 bis 8 C-Atomen ist, Bis(β-methoxycarbonyl-ethyl)zinn-bis(thioethylenglykol-2-ethylhexoat), Bis(β-methoxycarbonyl-ethyl)-zinn-bis(thioglykolsäure-2-ethylhexoat), und Bis(β-acetyl-ethyl)zinn-bis(thioethy-lenglykol-2-ethylhexoat) und Bis(β-acetyl-ethyl)zinn-bis(thioglykolsäure-2-ethyl-hexoat.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Aminogruppen. Konkret genannt seien: Dimethylmonoethanolamin, Diethylmonoethanolamin, Methylethylmonoethanolamin, Triethanolamin, Trimethanolamin, Tripropanolamin, Tributanolamin, Trihexanolamin, Tripentanolamin, Tricyclohexanolamin, Diethanolmethylamin, Diethanolethylamin, Diethanolpropylamin, Diethanolbutylamin, Diethanolpentylamin, Diethanolhexylamin, Diethanolcyclohexylamin, Diethanolphenylamin sowie deren Ethoxylierungs- und Propoxylierungs-Produkte, Diaza-bicyclo-octan (DABCO), Triethylamin, Dimethylbenzylamin (Desmorapid DB, BAYER), Bisdimethylaminoethylether (Calalyst A 1, UCC), Tetramethylguanidin, Bisdimethylaminomethyl-phenol, 2-(2-Dimethylaminoethoxy)ethanol, 2-Dimethylaminoethyl-3-dimethylaminopropylether, Bis(2-dimethylaminoethyl)ether, N,N-Dimethylpiperazin, N-(2-hydroxyethoxyethyl)-2-azanorbornane, oder auch ungesättigte bicyclische Amine, z. B. Diazabicycloundecen (DBU) sowie Texacat DP-914 (Texaco Chemical), N,N,N,N-Tetramethylbutan-1,3-diamin, N,N,N,N-Tetramethylpropan-1,3-diamin und N,N,N,N-Tetramethylhexan-1,6-diamin. Die Katalysatoren können auch in oligomerisierter oder polymerisierter Form vorliegen, z.B. als N-methyliertes Polyethylenimin.

Ganz besonders bevorzugte Katalysatoren sind jedoch die Derivate des Morpholins. Konkrete Beispiele für geeignete Morpholino-Verbindungen sind Bis(2-(2,6-dimethyl-4-morpholino) ethyl)-(2-(4-morpholino) ethyl) amin, Bis(2-(2,6-dimethyl-4-morpholino) ethyl)-(2-(2,6-diethyl-4-morpholino) ethyl) amin, Tris(2-(4-morpholino) ethyl) amin, Tris(2-(4-morpholino) propyl) amin, Tris(2-(4-morpholino) butyl) amin, Tris(2-(2,6-dimethyl-4-morpholino) ethyl) amin, Tris(2-(2,6-diethyl-4-morpholino) ethyl) amin, Tris(2-(2-methyl-4-morpholino) ethyl) amin oder Tris(2-(2-ethyl-4-morpholino) ethyl) amin, Dimethylaminopropylmorpholin, Bis-(morpholinopropyl)-methylamin, Diethylaminopropylmorpholin, Bis-(morpholinopropyl)-ethylamin, Bis-(morpholinopropyl)-propylamin, Morpholinopropylpyrrolidon oder N-Morpholinopropyl-N'-methyl-piperazin, Dimorpholinodiethylether (DMDEE) oder Di-2,6-dimethylmorpholinoethylether.

Die vorgenannten Morpholin-Derivate weisen eine besonders hohe katalytische Aktivität, insbesondere der Wasser- (Feuchtigkeits-) Isocyanat-Reaktion, auf. Deshalb sind bereits sehr niedrige Katalysatorkonzentrationen hocheffizient für Vernetzung bzw. Aushärtung der Klebstoffe, die Konzentrationen des Katalysators in der Klebstoff-Formulierung können zwischen 0,001 und 2 Gew.%, vorzugsweise zwischen 0,02 und 0,9 Gew.% liegen.

Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabiliser").

Bestehen wesentliche Bestandteile des Polyurethanprepolymers aus Polyesterbausteinen, können Hydrolyse-Stabilisatoren, z.B. vom Carbodiimid-Typ, eingesetzt werden.

Die erfindungsgemäß zu verwendenden Kleb- / Dichtstoffe können weiterhin an sich bekannte Weichmacher enthalten. Hierzu können Dialkylphthalate, Dialkyladipate, Dialkylsebacate, Alkylarylphthalate, Alkylbenzoate, Dibenzoate von Polyolen, wie Ethylenglycol, Propylenglycol oder den niederen Polyoxypropylen- oder Polyoxyethylenverbindungen, Anwendung finden. Weitere geeignete Weichmacher können Alkylphosphate, Arylphosphate oder Alkylarylphosphate sowie Alkylsulfonsäureester des Phenols oder auch paraffinische oder naphthenische Öle oder entaromatisierte Kohlenwasserstoffe als Verdünner sein. Wichtig ist bei der Mitverwendung von Weichmachern, dass diese so ausgewählt werden, dass sie das (oder die) feste(n) Polyamin (e) während der Lagerung des Kleb- / Dichtstoffes nicht angreifen (lösen), weil sie dadurch eine vorzeitige Aushärtung oder partielle Aushärtung des Kleb- / Dichtstoffs hervorrufen würden.

Zusätzlich können noch Zusätze zur Regelung des Fließverhaltens zugesetzt werden, beispielhaft erwähnt seinen Harnstoffderivate, fibrillierte oder Pulpkurzfasern, pyrogene Kieselsäuren und dergleichen.

Zur Herstellung von spezifisch leichten Kleb- / Dichtstoffen können auch Leichtfüllstoffe anteilig mit verwendet werden, beispielhaft genannt seien Kunststoffmikrohohlkugeln ("Microspheres"), vorzugsweise in vorexpandierter Form. Derartige Mikrohohlkugeln können entweder in der vorgeschäumten Form als Mikrohohlkugeln direkt dem Kleb- / Dichtstoff zugesetzt werden oder die "Mikrohohlkugeln" werden als feinteiliges Pulver in der ungeschäumten Form dem Kleb- / Dichtstoff zugesetzt. Diese ungeschäumten "Mikrohohlkugeln" expandieren erst bei der Erwärmung des Kleb- / Dichtstoffs und ergeben so eine sehr gleichmäßige und feinporige Schäumung. Die Mikrohohlkugeln enthalten ein flüssiges Treibmittel auf der Basis von aliphatischen Kohlenwasserstoffen oder Fluorkohlenwasserstoffen als Kern und eine Schale aus einem Copolymer aus Acrylnitril mit Vinylidenchlorid und/oder Methylmethacrylat und/oder Methacrylnitril. Die Verwendung derartiger Microspheres ist beispielsweise in der EP-A-559254 beschrieben. Derartige "Mikrohohlkugeln" sind z.B. unter dem Handelsnamen "Expancel" der Fa. Nobel Industries oder als "Dualite" von der Firma Pierce & Stevens im Handel erhältllch.

Um eine ausreichende Lagerstabilität bei Lagertemperaturen der Kleb-/Dichtstoff-Zusammensetzung bis zu 30 oder 40 °C zu erzielen und trotzdem eine hinreichend schnelle Aushärtung bei Temperaturen zwischen 70 °C und 120 °C zu bewirken, muss das feste Polyamin sorgfältig in Bezug auf Löslichkeit und verwendeter mittlerer Teilchengröße auf die es umgebende Klebstoff-Matrix abgestimmt werden. Wesentlich für die Lagerstabilität ist dabei, dass das feste Polyamin bei Temperaturen unterhalb von 40°C, vorzugsweise unterhalb von 30 °C in dispergierter Form in dem Bindemiftelsystem, d. h. in der Mischung aus isocyanatfunktionellem Prepolymer bzw. isocyanatfunktioneller Prepolymermischung und weiteren flüssigen Komponenten wie Weichmachern, Haftvermittlern udgl. praktisch unlöslich ist und somit keinerlei Reaktion mit dem Prepolymeren während der Lagerung eingehen kann. Andererseits muss das Polyamin im Bereich der Aktivierungstemperatur, d. h. insbesondere oberhalb seines Schmelzpunktes von 55 °C, vorzugsweise zwischen 60 °C und 120 °C eine genügend hohe Löslichkeit in dem Bindemittelsystem aufweisen, um rasch und möglichst vollständig mit den isocyanatgruppen des isocyanatfunktionellen Prepolymers abzureagieren.

Die erfindungsgemäß zu verwendenden Kleb-/Dichtstoff-Zusammensetzungen lassen sich ohne Probleme auch als hochviskose, pastöse Produkte herstellen. Dies ist ein wesentlicher Vorteil gegenüber den aus dem Stand der Technik bekannten oberflächenverkappselten oder oberflächendesaktivierten Aminen als Additiven.

Die erfindungsgemäß zu verwendenden Kleb-/Dichtstoff-Zusammensetzungen können in an sich bekannter Weise in Mischaggregaten mit hoher Scherwirkung hergestellt werden, hierzu gehören z. B. Kneter, Planetenmischer, Innenmischer, so genante "Banbury-Mischer" und ähnliche dem Fachmann bekannte Mischaggregate.

In den nachfolgenden Ausführungsbeispielen soll die Erfindung näher erläutert werden, wobei die Auswahl der Beispiele keine Beschränkung des Umfangs des Erfindungsgegenstandes darstellen soll.

### Beispiele

### Beispiel 1 (erfindungsgemäß):

In einem vorgeheizten Rührkessel wurden 1000 g trifunktionelles Polyetherpolyol (OH-Zahl 28), 2,25g p-Toluylsulfonylisocyanat in 15g Diisononylphthalat (DINP) und 150g 4,4'-Diphenylmethandiisocyanat bei ca. 100°C gemischt.
Anschließend wird eine Mischung aus 0,15g Zinn(11)isooctoat und 50g DINP eingesaugt und 20 Minuten gerührt: Zum Abbruch der Prepolymer-Synthese wird eine Mischung aus 0,75 g Benzoylchlorid in 400 g DINP eingerührt. Anschließend wurden 250g Kreide und 825,35g Ruß im Prepolymer homogen dispergiert, danach wird das Produkt durch Unterrühren von 210 g DINP etwas verdünnt. Die Zugabe von 1,5g eines handelsüblichen Zinnkatalysators (DBTL) in 50g DINP schließt den ersten Teil der Herstellung ab.
Nach dem Abkühlen des Materials auf Raumtemperatur wurden 50 g 1,12-Diaminododecan, mittlere Teilchengröße 9,9 µm ("Median size"), untergemischt. Man erhielt einen Klebstoff, der bei 40°C lagerstabil ist und nach thermischer Aushärtung (30 min. bei 70°C) eine Reißfestigkeit von 6,5 MPa bei einer Reißdehnung von 250% aufwies.

### Beispiel 2: (Vergleichsbeispiel)

Ein Klebstoff wurde analog zu Beispiel 1 hergestellt, es wurden 205g an Stelle von 250g Kreide eingesetzt.

In diesen Klebstoff wurden nach dem Abkühlen 90g Caytur 31 an Stelle von 50 g 1,12-Diaminododecan eingerührt. Nach 30 min. bei 70°C fand man lediglich die durch Feuchtehärtung entstandene Haut, eine Hitzehärtung war nicht erfolgt.
"Caytur 31" ist ein stabiler Komplex aus Methylendianilin und Natriumchlorid.

### Beispiel 3: (Vergleichsbeispiel)

Ein Klebstoff wurde analog zu Beispiel 1 hergestellt, es wurden 205g an Stelle von 250g Kreide eingesetzt.
In diesen Klebstoff wurden nach dem Abkühlen 90g Lonzacure M-CDEA an Stelle von 50 g 1,12-Diaminododecan eingerührt. Nach einigen Stunden ist das Material bereits bei Raumtemperatur ausgehärtet.
"Lonzacure M-CDEA" ist 4,4'-Methylenbis(3-chlor-2,6-diethylanilin).

Das erfindungsgemäße Beispiel 1 zeigt eine vorteilhafte Ausgestaltung der erfindungsgemäßen Kleb-/Dichtstoff-Zusammensetzung, die bei üblichen Lagertemperaturen bis zu 40 °C lagerstabil ist und nach kurzer thermischer Aushärtung bei 70 °C bereits eine hohe Reißfestigkeit aufweist.

Der Aminkomplex des Vergleichsbeispiels 2 weist anscheinend eine so geringe Löslichkeit im Kleb-/Dichtstoff-System auf, dass eine Aktivierung auf 70 °C keinerlei Wärmehärtung bewirkt. Außerdem sind derartige Methylendianilin-verbindungen heute aus arbeitshygienischen Gründen in Kleb-/Dichtstoff-Zusammensetzungen unerwünscht, da das Methylendianilin im Verdacht steht, Krebs zu erzeugen.

Das Vergleichsbeispiel 3 ist ein Beispiel, bei dem das Amin in der vorliegenden Teilchengrößenverteilung offensichtlich eine zu hohe Löslichkeit in dem vorgegebenen Kleb-/Dichtstoff-System aufweist, so dass es zu einer vorzeitigen Aushärtung bei Lagerungsbedingungen kommt.

## Patentansprüche

1. Verwendung einer hitze- und feuchtigkeitshärtenden Zusammensetzung enthaltend
a) mindestens ein isocyanatfunktionelles Prepolymer mit im Wesentlichen endständigen Isocyanatgruppen, herstellbar durch Reaktion eines Polyols mit einem stöchiometrischen Überschuss einer Polyisocyanatverbindung und
b) mindestens ein Polyamin mit mindestens zwei primären oder sekundären Aminogruppen pro Molekül und einem Schmelzpunkt oberhalb von 55°C
wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymers vorliegt,
zum Kleben von Bauteilen oder Baugruppen in der Fahrzeugindustrie, insbesondere zum Kleben von feststehenden Scheiben an den Flansch einer Fahrzeugkarosserie, zum Kleben von Außenblechen an den Rahmen von Anbauteilen, insbesondere von Türen, zum Kleben von Dachmodulen oder Fahrzeughimmeln an die Karosserie oder zum Kleben von Cockpitmodulen in den Fahrzeugrahmen, **dadurch gekennzeichnet, dass** der stöchiometrische Unterschuss der Aminogruppen zu den Isocyanatgruppen 30 % bis 10 % beträgt.

2. Verwendung nach Anspruch 1, **dadurch gekennzeichnet, dass** die mittlere Teilchengröße des Polyamins zwischen 90 µm und 30 µm liegt.

3. Verwendung nach einem oder mehreren der Ansprüche 1 bis 2, **dadurch gekennzeichnet, dass** der Schmelzpunkt des Polyamins zwischen 60°C und 120°C liegt.

4. Verfahren zum Kleben von Bauteilen oder Baugruppen in der Fahrzeugindustrie, bei denen mindestens ein Bauteil oder eine Baugruppe im Fügebereich transparent für Mikrowellenstrahlung ist, **gekennzeichnet durch** die folgenden wesentlichen Schritte
i) Aufbringen eines Klebstoffstranges auf Basis einer hitze- und feuchtigkeitshärtenden Zusammensetzung enthaltend
a) mindestens ein isocyanatfunktionelles Prepolymer mit im Wesentlichen endständigen Isocyanatgruppen, herstellbar **durch** Reaktion eines Polyols mit einem stöchiometrischen Überschuss einer Polyisocyanatverbindung und
b) mindestens ein Polyamin mit mindestens zwei primären oder sekundären Aminogruppen pro Molekül und einem Schmelzpunkt oberhalb von 55°C
wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymers vorliegt, auf die Oberfläche eines Bauteils,
ii) Fügen des zweiten Bauteiles, gegebenenfalls unter Zusammenpressen der Bauteile, bis die vorbestimmte Schichtdicke der Klebstoffschicht in der Klebefuge erreicht ist,
iii) Bestrahlen der Klebefuge mit Mikrowellenstrahlung **durch** das transparente Bauteil,
iv) gefolgt von einer Feuchtigkeitshärtung der verbliebenen Isocyanatgruppen des Klebstoffes mit der Luftfeuchtigkeit der Umgebung.

5. Verfahren nach Anspruch 4, **dadurch gekennzeichnet, dass** die mikrowellenaktivierte thermische Härtung nur punktförmig oder bereichsweise erfolgt.

6. Verfahren zum Kleben von Bauteilen oder Baugruppen in der Fahrzeugindustrie, bei denen die zu fügenden beiden Baugruppen oder Bauteile im Fügebereich aus metallischen Substraten bestehen, **gekennzeichnet durch** die folgenden wesentlichen Verfahrensschritte
i) Aufbringen eines Klebstoffstranges auf Basis einer hitze- und feuchtigkeitshärtenden Zusammensetzung enthaltend.
a) mindestens ein isocyanatfunktionelles Prepolymer mit im Wesentlichen endständigen isocyanatgruppen, herstellbar **durch** Reaktion eines Polyols mit einem stöchiometrischen Überschuss einer Polyisocyanatverbindung und
b) mindestens ein Polyamin mit mindestens zwei primären oder sekundären Aminogruppen pro Molekül und einem Schmelzpunkt oberhalb von 55°C
wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymers vorliegt, auf die Oberfläche eines Bauteils,
ii) Fügen des zweiten Bauteils, gegebenenfalls unter Zusammenpressen der Bauteile, bis die vorbestimmte Schichtdicke der Klebstoffschicht in der Klebefuge erreicht ist,
iii) Erwärmen des Fügebereichs mit einer geeigneten Induktionsheizungsspule,
iv) gefolgt von einer Feuchtigkeitshärtung der verbliebenen isocyanatgruppen des Klebstoffes mit der Luftfeuchtigkeit der Umgebung.

7. Verfahren zum Kleben von Bauteilen oder Baugruppen in der Fahrzeugindustrie, bei denen die zu fügenden beiden Baugruppen oder Bauteile im Fügebereich aus metallischen Substraten bestehen, **gekennzeichnet durch** die folgenden wesentlichen Verfahrensschritte
i) Aufbringen eines Klebstoffstranges auf Basis einer hitze- und feuchtigkeitshärtenden Zusammensetzung enthaltend
a) mindestens ein isocyanatfunktionelles Prepolymer mit im Wesentlichen endständigen Isocyanatgruppen, herstellbar **durch** Reaktion eines Polyols mit einem stöchiometrischen Überschuss einer Polyisocyanatverbindung und
b) mindestens ein Polyamin mit mindestens zwei primären oder sekundären Aminogruppen pro Molekül und einem Schmelzpunkt oberhalb von 55°C
wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymers vorliegt, auf die Oberfläche eines Bauteils,
ii) Fügen des zweiten Bauteils, gegebenenfalls unter Zusammenpressen der Bauteile, bis die vorbestimmte Schichtdicke der Klebstoffschicht in der Klebefuge erreicht ist,
iii) Erwärmen des Fügebereichs mit Hilfe von Heizzangen,
iv) gefolgt von einer Feuchtigkeitshärtung der verbliebenen Isocyanatgruppen des Klebstoffes mit der Luftfeuchtigkeit der Umgebung.

8. Verfahren nach einem oder mehreren der Ansprüche 4 bis 7, **dadurch gekennzeichnet, dass** der stöchiometrische Unterschuss der Aminogruppen zu den isocyanatgruppen 50 % bis 10 % beträgt.

9. Verfahren nach einem oder mehreren der Ansprüche 4 bis 8, **dadurch gekennzeichnet, dass** die mittlere Teilchengröße des Polyamins zwischen 10 µm und 30 µm liegt

10. Verfahren nach einem oder mehreren der Ansprüche 4 bis 9, **dadurch gekennzeichnet, dass** der Schmelzpunkt des Polyamins zwischen 60°C und 120°C liegt.

11. Hitze- und feuchtigkeitshärtende Zusammensetzung enthaltend
a) mindestens ein isocyanatfunktionelles Prepolymer mit im Wesentlichen endständigen Isocyanatgruppen, herstellbar durch Reaktion eines Polyols mit einem stöchiometrischen Überschuss einer Polyisocyanatverbindung und
b) mindestens ein Polyamin mit mindestens zwei primären oder sekundären Aminogruppen pro Molekül und einem Schmelzpunkt oberhalb von 55°C
wobei das feste Polyamin eine mittlere Teilchengröße von 5 bis 50 µm hat, bei Temperaturen unter 40°C unlöslich in der Prepolymer-Zubereitung ist und im stöchiometrischen Unterschuss zu den Isocyanatgruppen des Prepolymer vorliegt,
**dadurch gekennzeichnet, dass** der Unterschuss der Aminogruppen 30% bis 20 % beträgt.

12. Zusammensetzung nach Anspruch 11, **dadurch gekennzeichnet, dass** die mittlere Teilchengröße des Polyamins zwischen 10 µm und 30 µm liegt

13. Zusammensetzung nach einem oder beiden der Ansprüche 11 und 12, **dadurch gekennzeichnet, dass** der Schmelzpunkt des Polyamins zwischen 60°C und 120°C liegt.

14. Zusammensetzung nach einem oder mehreren der Ansprüche 11 bis 13 **dadurch gekennzeichnet, dass** das (die) Prepolymer(en) durch Umsetzung von Diisocyanaten mit Polyolen ausgewählt aus Polyetherpolyolen, Polyesterpolyolen, Polyacrylatpolyolen, Polyolefinpolyolen und/oder Polyetheresterpolyolen mit einem stöchiometrischen Überschuss an Diisocyanat hergestellt wird (werden).

## Claims

1. The use of a heat- and moisture-curable composition containing
a) at least one isocyanate-functional prepolymer with essentially terminal isocyanate groups, which may be prepared by reaction of a polyol with a stoichiometric excess of a polyisocyanate compound and
b) at least one polyamine with at least two primary or secondary amino groups per molecule and a melting point above 55°C
wherein the solid polyamine has an average particle size from 5 to 50 µm, is insoluble at temperatures below 40°C in the prepolymer preparation and exists in a sub-stoichiometric amount relatively to the isocyanate groups of the prepolymer,
for adhesively bonding components or groups of components in the automotive industry, in particular for adhesively bonding fixed panes on the flange of a vehicle body, for adhesively bonding outer metal sheets on the frame of add-on parts, in particular of doors, for adhesively bonding roof modules or vehicle interior roof linings on the body or for adhesively bonding cockpit modules in the vehicle frame, **characterized in that** the sub-stoichiometric amount of the amino groups relatively to the isocyanate groups is from 30% to 10%.

2. The use according to claim 1, **characterized in that** the average particle size of the polyamine lies between 10 µm and 30 µm.

3. The use according to one of more of claims 1 to 2, **characterized in that** the melting point of the polyamine lies between 60°C and 120°C.

4. A method for adhesively bonding components or groups of components in the automotive industry, in which at least one component or one group of components in the joining region is transparent to microwave radiation, **characterized by** the following essential steps
i) applying an adhesive bead on the basis of a heat- and moisture-curable composition containing
a) at least one isocyanate-functional prepolymer with essentially terminal isocyanate groups, which may be prepared by reaction of a polyol with a stoichiometric excess of a polyisocyanate compound and
b) at least one polyamine with at least two primary or secondary amino groups per molecule and a melting point above 55°C
wherein the solid polyamine has an average particle size from 5 to 50 µm, is insoluble at temperatures below 40°C in the prepolymer preparation and exists a sub-stoichiometric amount relatively to the isocyanate groups of the prepolymer, on the surface of a component,
ii) joining the second component, if necessary by pressing together the components, until the predetermined layer thickness of the adhesive layer is reached in the adhesive joint,
iii) irradiatiing the adhesive joint with microwave radiation through the transparent component,
iv) followed by moisture-curing of the remaining isocyanate groups of the adhesive with the air moisture of the environment.

5. The method according to claim 4, **characterized in that** the microwave-activated heat-curing only occurs punctually or area-wise.

6. A method for adhesively bonding components or groups of components in the automotive industry, in which both groups of components or components to be joined in the joint area consist of metal substrates, **characterized by** the following essential method steps
i) applying an adhesive bead on the basis of a heat- and moisture-curable composition containing
a) at least one isocyanate-functional prepolymer with essentially terminal isocyanate groups, which may be prepared by reaction of a polyol with a stoichiometric excess of a polyisocyanate compound and
b) at least one polyamine with at least two primary or secondary amino groups per molecule and a melting point above 55°C
wherein the solid polyamine has an average particle size from 5 to 50 µm, is insoluble at temperatures below 40°C in the prepolymer preparation and exists in a sub-stoichiometric amount relatively to the isocyanate groups of the prepolymer, on the surface of a component,
ii) joining the second component, if necessary by pressing the components together, until the predetermined layer thickness of the adhesive layer is reached in the adhesive joint,
iii) heating up the joint area with a suitable induction-heating coil,
iv) followed by moisture-curing of the remaining isocyanate groups of the adhesive with the air moisture of the environment.

7. A method for adhesively bonding components or groups of components in the automotive industry, in which both groups of components or components to be joined in the joint area consist of metal substrates, **characterized by** the following essential method steps
i) applying an adhesive bead on the basis of a heat- and moisture-curable composition containing
a) at least one isocyanate-functional prepolymer with essentially terminal isocyanate groups, which may be prepared by reaction of a polyol with a stoichiometric excess of a polyisocyanate compound and
b) at least one polyamine with at least two primary or secondary amino groups per molecule and a melting point above 55°C
wherein the solid polyamine has an average particle size from 5 to 50 µm, is insoluble at temperatures below 40°C in the prepolymer preparation and exists in a sub-stoichiometric amount relatively to the isocyanate groups of the prepolymer, on the surface of a component,
ii) joining the second component, if necessary by pressing the components together, until the predetermined layer thickness of the adhesive layer is reached in the adhesive joint,
iii) heating up the joint area with heating tougs,
iv) followed by moisture-curing of the remaining isocyanate groups of the adhesive with the air moisture of the environment.

8. The method according to one or more of claims 4 to 7, **characterized in that** the stoichiometric excess of the amino groups relatively to the isocyanate groups is from 50% to 10%.

9. The method according to one or more of claims 4 to 8, **characterized in that** the average particle size of the polyamine lies between 10 µm and 30 µm.

10. The method according to one or more of claims 4 to 9, **characterized in that** the melting point of the polyamine lies between 60°C and 120°C.

11. A heat- and moisture-curable composition containing
a) at least one isocyanate-functional prepolymer with essentially terminal isocyanate groups, which may be prepared by reaction of a polyol with a stoichiometric excess of a polyisocyanate compound and
b) at least one polyamine with at least two primary or secondary amino groups per molecule and a melting point above 55°C
wherein the solid polyamine has an average particle size from 5 to 50 µm, is insoluble at temperatures below 40°C in the prepolymer preparation and exists in a sub-stoichiometric amount relatively to the isocyanate groups of the prepolymer,
**characterized in that** the sub-stoichiometric amount of the amino groups is from 30% to 20%.

12. The composition according to claim 11, **characterized in that** the average particle size of the polyamine lies between 10 µm and 30 µm.

13. The composition according to any or both of claims 11 and 12, **characterized in that** the melting point of the polyamine lies between 60°C and 120°C.

14. The composition according to one or more of claims 11 to 13, **characterized in that** the prepolymer(s) by reaction of diisocyanates with polyols selected from polyetherpolyols, polyesterpolyols, polyacrylatepolyols, polyolefinpolyols and/or polyetheresterpolyols is(are) prepared with a stoichiometric excess of diisocyanate.

## Revendications

1. Utilisation d'une composition durcissable sous l'effet de la chaleur et de l'humidité, contenant
a) au moins un prépolymère à fonctionnalité isocyanate avec des groupes isocyanate essentiellement en position terminale, pouvant être préparé par réaction d'un polyol avec un excès stoechiométrique d'un composé polyisocyanate et
b) au moins une polyamine présentant au moins deux groupes amino primaires ou secondaires par molécule et un point de fusion supérieur à 55°C
la polyamine solide présentant une grosseur moyenne des particules de 5 à 50 µm, étant insoluble dans la composition du prépolymère à des températures inférieures à 40°C et se trouvant en une quantité inférieure à la quantité stoechiométrique par rapport aux groupes isocyanate du prépolymère,
pour le collage de pièces ou d'éléments dans l'industrie automobile, en particulier pour le collage de vitres fixes à la bride d'une carrosserie de voiture, pour le collage de tôles extérieures aux cadres d'accessoires, en particulier de portes, pour le collage de modules de toit ou des ciels de voiture à la carrosserie ou pour le collage de modules de poste de pilotage dans les cadres de véhicules, **caractérisée en ce que** la quantité inférieure à la quantité stoechiométrique des groupes amino par rapport aux groupes isocyanate est de 30% à 10%.

2. Utilisation selon la revendication 1, **caractérisée en ce que** la grosseur moyenne des particules de la polyamine est située entre 10 µm et 30 µm.

3. Utilisation selon l'une ou plusieurs des revendications 1 à 2, **caractérisée en ce que** le point de fusion de la polyamine est situé entre 60°C et 120°C.

4. Procédé pour le collage de pièces ou d'éléments dans l'industrie automobile, dans lequel au moins une pièce ou un élément est transparent au rayonnement de micro-ondes dans la zone du joint, **caractérisé par** les étapes essentielles suivantes
i) application d'un cordon d'adhésif à base d'une composition durcissant sous l'effet de la chaleur et de l'humidité, contenant
a) au moins un prépolymère à fonctionnalité isocyanate avec des groupes isocyanate essentiellement en position terminale, pouvant être préparé par réaction d'un polyol avec un excès stoechiométrique d'un composé polyisocyanate et
b) au moins une polyamine présentant au moins deux groupes amino primaires ou secondaires par molécule et un point de fusion supérieur à 55°C
la polyamine solide présentant une grosseur moyenne des particules de 5 à 50 µm, étant insoluble dans la composition du prépolymère à des températures inférieures à 40°C et se trouvant en une quantité inférieure à la quantité stoechiométrique par rapport aux groupes isocyanate du prépolymère, à la surface d'une pièce,
ii) assemblage de la deuxième pièce, le cas échéant en pressant les pièces ensemble, jusqu'à ce qu'une épaisseur de couche prédéfinie de la couche d'adhésif soit atteinte dans le joint de colle,
iii) irradiation du joint de colle par un rayonnement de micro-ondes au travers de la pièce transparente,
iv) suivie d'un durcissement sous l'effet de l'humidité des groupes isocyanate résiduels de l'adhésif par l'humidité de l'air ambiant.

5. Procédé selon la revendication 4, **caractérisé en ce que** le durcissement thermique activé par les micro-ondes n'est réalisé que sous forme de points ou par zones.

6. Procédé pour le collage de pièces ou d'éléments dans l'industrie automobile, dans lequel les deux éléments ou pièces à assembler sont constitués, dans la zone du joint, de substrats métalliques, **caractérisé par** les étapes essentielles suivantes
i) application d'un cordon d'adhésif à base d'une composition durcissant sous l'effet de la chaleur et de l'humidité, contenant
a) au moins un prépolymère à fonctionnalité isocyanate avec des groupes isocyanate essentiellement en position terminale, pouvant être préparé par réaction d'un polyol avec un excès stoechiométrique d'un composé polyisocyanate et
b) au moins une polyamine présentant au moins deux groupes amino primaires ou secondaires par molécule et un point de fusion supérieur à 55°C
la polyamine solide présentant une grosseur moyenne des particules de 5 à 50 µm, étant insoluble dans la composition du prépolymère à des températures inférieures à 40°C et se trouvant en une quantité inférieure à la quantité stoechiométrique par rapport aux groupes isocyanate du prépolymère, à la surface d'une pièce,
ii) assemblage de la deuxième pièce, le cas échéant en pressant les pièces ensemble, jusqu'à ce qu'une épaisseur de couche prédéfinie de la couche d'adhésif soit atteinte dans le joint de colle,
iii) chauffage de la zone du joint avec une bobine chauffante par induction appropriée,
iv) suivie d'un durcissement sous l'effet de l'humidité des groupes isocyanate résiduels de l'adhésif par l'humidité de l'air ambiant.

7. Procédé pour le collage de pièces ou d'éléments dans l'industrie automobile, dans lequel les deux éléments ou pièces à assembler sont constitués, dans la zone du joint, de substrats métalliques, **caractérisé par** les étapes essentielles suivantes
i) application d'un cordon d'adhésif à base d'une composition durcissant sous l'effet de la chaleur et de l'humidité, contenant
a) au moins un prépolymère à fonctionnalité isocyanate avec des groupes isocyanate essentiellement en position terminale, pouvant être préparé par réaction d'un polyol avec un excès stoechiométrique d'un composé polyisocyanate et
b) au moins une polyamine présentant au moins deux groupes amino primaires ou secondaires par molécule et un point de fusion supérieur à 55°C
la polyamine solide présentant une grosseur moyenne des particules de 5 à 50 µm, étant insoluble dans la composition du prépolymère à des températures inférieures à 40°C et se trouvant en une quantité inférieure à la quantité stoechiométrique par rapport aux groupes isocyanate du prépolymère, à la surface d'une pièce,
ii) assemblage de la deuxième pièce, le cas échéant en pressant les pièces ensemble, jusqu'à ce qu'une épaisseur de couche prédéfinie de la couche d'adhésif soit atteinte dans le joint de colle,
iii) chauffage de la zone du joint à l'aide de pinces chauffantes,
iv) suivie d'un durcissement sous l'effet de l'humidité des groupes isocyanate résiduels de l'adhésif par l'humidité de l'air ambiant.

8. Procédé selon l'une ou plusieurs des revendications 4 à 7, **caractérisé en ce que** la quantité inférieure à la quantité stoechiométrique des groupes amino par rapport aux groupes isocyanate est de 50% à 10%.

9. Procédé selon l'une ou plusieurs des revendications 4 à 8, **caractérisé en ce que** la grosseur moyenne des particules de la polyamine est située entre 10 µm et 30 µm.

10. Procédé selon l'une ou plusieurs des revendications 4 à 9, **caractérisé en ce que** le point de fusion de la polyamine est situé entre 60°C et 120°C.

11. Composition durcissable sous l'effet de la chaleur et de l'humidité, contenant
a) au moins un prépolymère à fonctionnalité isocyanate avec des groupes isocyanate essentiellement en position terminale, pouvant être préparé par réaction d'un polyol avec un excès stoechiométrique d'un composé polyisocyanate et
b) au moins une polyamine présentant au moins deux groupes amino primaires ou secondaires par molécule et un point de fusion supérieur à 55°C
la polyamine solide présentant une grosseur moyenne des particules de 5 à 50 µm, étant insoluble dans la composition du prépolymère à des températures inférieures à 40°C et se trouvant en une quantité inférieure à la quantité stoechiométrique par rapport aux groupes isocyanate du prépolymère, **caractérisée en ce que** la quantité inférieure à la quantité stoechiométrique des groupes amino est de 30% à 20%.

12. Composition selon la revendication 11, **caractérisée en ce que** la grosseur moyenne des particules de la polyamine est située entre 10 µm et 30 µm.

13. Composition selon l'une des revendications ou les deux revendications 11 et 12, **caractérisée en ce que** le point de fusion de la polyamine est situé entre 60°C et 120°C.

14. Composition selon l'une quelconque ou plusieurs des revendications 11 à 13, **caractérisée en ce que** le (les) prépolymère(s) est/sont préparé(s) par transformation de diisocyanates avec des polyols choisis parmi les polyétherpolyols, les polyesterpolyols, les polyacrylate-polyols, les polyoléfine-polyols et/ou les polyétheresterpolyols avec une quantité supérieure à la quantité stoechiométrique de diisocyanate.
